# NOUVEAU FASCICULE DE BREVET EUROPEEN

(11) **EP 0 698 751 B2**
(45) Date de publication et mention de la décision concernant l'opposition: **10.04.2002**
(45) Mention de la délivrance du brevet: 29.07.1998
(21) Numéro de dépôt: 95113220.8
(22) Date de dépôt: 23.08.1995
(51) Int. Cl.: F16F 15/12, F16F 15/129, F16F 15/123

(54) **Amortisseur de torsion, notamment pour véhicule automobile**
Drehschwingungsdämpfer, insbesondere für Kraftfahrzeuge
Rotational damper, especially for motor vehicles

(30) Priorité: 24.08.1994 FR 9410310
(43) Date de publication de la demande: 28.02.1996
(73) Titulaire: VALEO, 75017 Paris (FR)
(72) Inventeur: Graton, Michel, F-75020 Paris (FR); Viola, Paolo, F-75007 Paris (FR)
(74) Mandataire: Gamonal, Didier

(56) Documents cités:
- DE-A1- 3 922 730
- DE-A1- 4 317 332
- FR-A- 2 611 245
- FR-A- 2 690 722
- GB-A- 2 219 373
- GB-A- 2 233 735

## Description

La présente invention concerne d'une manière générale les amortisseurs de torsion, notamment pour véhicule automobile, du genre comportant une partie d'entrée et une partie de sortie, qui sont mobiles angulairement l'un par rapport à l'autre dans les limites d'un débattement angulaire déterminé, la partie d'entrée et la partie de sortie étant accouplées par deux dispositifs amortisseurs de torsion, d'action étagée, dont l'un dit premier dispositif ou préamortisseur est plus faible que l'autre, dit second dispositif ou amortisseur principal, chacun de ces deux dispositifs comportant un voile, deux rondelles de guidage solidaires l'une de l'autre et disposées axialement de part et d'autre du voile, des moyens élastiques à action circonférentielle interposés circonférentiellement entre le voile et les rondelles, le voile du préamortisseur étant solidaire en rotation de la partie de sortie, les rondelles de ce préamortisseur étant solidaire en rotation du voile de l'amortisseur principal et ce. voile principal étant monté sur la partie de sortie avec un jeu permettant ledit débattement angulaire déterminé.

La présente invention a également pour objet un module d'embrayage comportant un tel amortisseur.

Cet amortisseur de torsion est décrit dans le document FR-A-2 611 245. Il appartient à un disque de friction d'embrayage comportant un préamortisseur monté au sein de l'amortisseur principal.

Usuellement un embrayage comporte successivement axialement un plateau de réaction, éventuellement en deux parties pour formation d'un volant amortisseur, un disque de friction portant à sa périphérie externe des garnitures de friction, un plateau de pression, des moyens élastiques à action axiale et un couvercle.

Le plus souvent les moyens élastiques à action axiale consistent en un diaphragme et l'ensemble des pièces plateau de pression - diaphragme - couvercle forme de manière unitaire un mécanisme d'embrayage propre à être fixé par son couvercle sur le plateau de réaction.

En pratique le plateau de réaction est fixé par vissage sur un arbre menant et ce vissage se fait avant la fixation du mécanisme sur le plateau de réaction.

Dans certains cas, il peut être souhaitable de former un ensemble unitaire, appelé module d'embrayage, comportant le mécanisme d'embrayage, le disque de friction et le plateau de réaction.

Il faut alors rapporter cet ensemble sur le vilebrequin du moteur (l'arbre menant précité). Avec le type d'amortisseur précité, il se pose un problème car on ne peut pas passer à travers celui-ci pour visser le module sur le vilebrequin.

En effet, le préamortisseur est implanté en pratique centralement et ce axialement entre l'une des rondelles de guidage, dite première rondelle de guidage, et le voile de l'amortisseur principal.

La présente invention a pour objet de pallier cet inconvénient, de manière simple et économique.

Suivant l'invention, un amortisseur de torsion selon le préambule de la revendication 1 et connu de FR-A-2611 245 est caractérisé en ce que, pour formation d'un passage traversant, les rondelles de guidage et le voile de l'amortisseur principal, ainsi que le voile du préamortisseur sont dotés de trous de passage, en coïncidence axiale les uns avec les autres et déterminant un axe axial commun, et en ce que les rondelles de guidage du préamortisseur sont implantées radialement à l'extérieur des axes des trous de passage.

Grâce à l'invention, il devient possible de passer un outil à travers le passage et ainsi il est possible de monter le module d'embrayage sur le vilebrequin du moteur. Ainsi les rondelles de guidage du préamortisseur ont une hauteur réduite, ce qui permet de réduire les coûts de fabrication. Il en resuite que les moyens élastiques du préamortisseur sont radialement proches des moyens élastiques de l'amortisseur principal.

Bien entendu le nombre de passages ainsi réalisés dépend du nombre des vis de fixation.

Avantageusement le voile du préamortisseur a une forme tortueuse et présente une partie externe décalée axialement par rapport à sa partie interne plus proche du voile de l'amortisseur principal.

Ainsi il est possible de réduire l'encombrement axial de l'amortisseur au niveau de la partie de sortie, cela étant possible du fait que les rondelles de guidage du préamortisseur sont surélevées, en sorte que le voile du préamortisseur peut venir à sa périphérie interne au voisinage du voile de l'amortisseur principal.

Grâce à ce décalage il devient possible d'implanter un dispositif de frottement au niveau de la partie interne du voile du préamortisseur.

Suivant une autre caractéristique, la première rondelle de guidage de l'amortisseur principal, adjacente à la rondelle de guidage concernée du préamortisseur, est dotée d'un renflement saillant pour logement de ladite rondelle de guidage du préamortisseur.

Grâce à cette disposition le mouvement du diaphragme n'est pas perturbé.

Suivant l'invention un module d'embrayage est caractérisé en ce qu'il comporte un amortisseur de torsion présentant au moins les caractéristiques de l'une des revendications 1 à 9.

La description qui va suivre illustre l'invention en regard des dessins annexés dans lesquels :
- la figure 1 est une vue en coupe axiale d'un module d'embrayage équipé d'un amortisseur de torsion selon l'invention ;
- la figure 2 reprend à plus grande échelle un détail de la figure 1 ;
- la figure 3 est une vue partielle selon la flèche 3 de la figure 2.

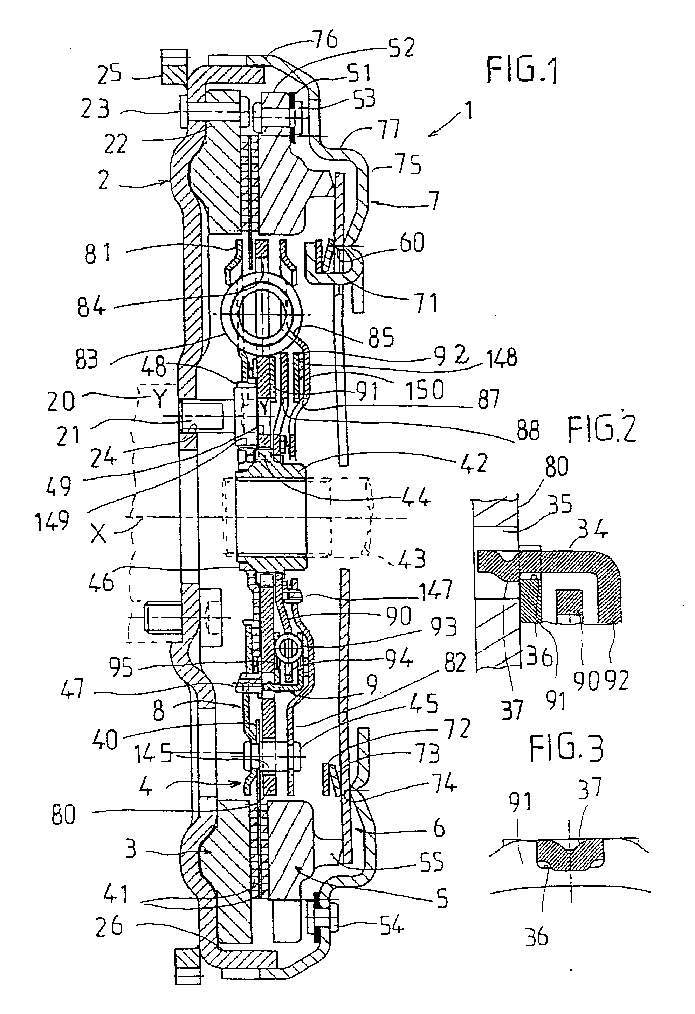

Dans la figure 1 est illustré un embrayage comprenant un module d'embrayage pour véhicule automobile et comportant successivement axialement un ensemble de pièces globalement annulaires de même axe X à savoir un plateau de réaction 2,3, un disque de friction 4, un plateau de pression 5, un diaphragme 6 et un couvercle 7.

Le plateau de réaction 2,3 est destiné à être calé en rotation sur le vilebrequin 20 du moteur à combustion interne du véhicule automobile, en étant fixé ici à l'aide de vis 21 sur ledit vilebrequin.

Le plateau de réaction est ici en deux parties 2,3 à savoir un flasque métallique de support, d'orientation transversale, et un plateau 3, ici en fonte.

Le plateau 3 forme le plateau de réaction proprement dit et offre ainsi une face de friction pour le disque de friction 4. Ce plateau 3 est de forme semblable au plateau de pression 5.

Ce plateau 3 présente à sa périphérie externe des pattes radiales 22 par l'intermédiaire desquelles il est fixé à l'aide d'organes de fixation 23, ici des rivets en variante des vis ou des boulons, sur le flasque 2 à la périphérie externe de celui-ci.

On notera que le plateau 3 présente sur saface adjacente au flasque 2, des bossages montés dans des creusures réalisées dans le flasque 2 et ce à la périphérie externe du flasque 2 en-dessous des rivets 23.

En pratique les bossages sont fractionnés en sorte qu'une ventilation est réalisée entre le flasque 2 et le plateau 3.

Le flasque 2 est nervuré et présente à sa périphérie interne des trous 24 répartis régulièrement circulairement pour le passage de vis de fixation du module au vilebrequin 20.

C'est sur ce flasque qu'est rapporté, ici par soudage, la couronne de démarrage 25 propre à être entraînée par le démarreur du véhicule. Le flasque 2 présente à sa périphérie externe une jupe annulaire 26, d'orientation axiale, pour montage du couvercle 7, de forme creuse et métallique, présentant à cet effet à sa périphérie externe une jupe annulaire 76 d'orientation axiale montée à emmanchement coulissant sur la jupe 26 de manière complémentaire en étant fixée à celle-ci par soudage.

La jupe 26 permet donc le centrage du couvercle 7 et sa fixation. Elle permet aussi de régler l'inclinaison du diaphragme en emmanchant plus ou moins le couvercle 7 sur la jupe 26.

La charge exercée par le diaphragme peut être également réglée de cette manière.

Le disque de friction 4 présente à sa périphérie externe un support métallique 40, formant la partie d'entrée d'un amortisseur de torsion et portant à fixation, par exemple par rivetage ou collage, sur chacune de ses faces des garnitures de frottement 41, éventuellement fractionnées, propres à être serrées entre le plateau de réaction proprement dit 3 et le plateau de pression 5 de l'embrayage.

Le plateau de pression 5, ici en fonte, est lié en rotation au couvercle 7 avec mobilité axiale, de manière connue en soi, par l'intermédiaire de languettes élastiques 51 d'orientation tangentielle, dont les extrémités sont fixées à l'aide d'organes de fixation 53,54 respectivement sur des pattes radiales 52, que présente le plateau 5 à sa périphérie externe, et sur le couvercle 7.

Les organes 53,54 consistent en des rivets, en variante en des vis.

Le plateau 5 présente également un bourrelet annulaire 55 fragmenté pour appui du diaphragme 6 métallique, présentant à l'état libre une forme tronconique.

On notera que le couvercle 7 présente des trous en coïncidence avec les rivets 53 pour permettre le rivetage.

Le diaphragme 6 comporte, de manière connue en soi, une partie périphérique en forme de rondelle Belleville et une partie centrale fragmentée en doigts radiaux par des fentes débouchant à la périphérie interne de la rondelle Belleville dans des orifices élargis 60 traversés ici par des pattes d'assemblage 71, d'orientation axiale, issues directement du couvercle 7 en tôle par découpe et pliage. L'extrémité libre des pattes 71 est repliée radialement vers l'extérieur pour formation d'un coude de calage pour une rondelle de support 72. Les pattes 71 sont issues du fond 75, d'orientation transversale, que présente le couvercle 7. Ce fond 75, troué centralement, est doté d'un embouti 74 pour formation d'un appui primaire pour le diaphragme.

En regard de cet appui 74 il est prévu un appui secondaire formé par la périphérie externe d'une rondelle tronconique 73 interposée axialement entre le diaphragme 6 et la couronne de support 72.

Ainsi le diaphragme 6 est monté de manière pivotante entre les appuis 74,73, la périphérie externe de sa rondelle Belleville prenant appui sur le bossage 55 du plateau 5, tandis qu'à sa périphérie interne cette rondelle Belleville est interposée entre les appuis 73,74.

L'embrayage est ainsi du type poussé et le diaphragme 6 prend appui sur le couvercle 7 pour appui sur le plateau de pression 5 et serrage des garnitures 41 du disque 4 entre les plateaux 3,5.

L'embrayage est ainsi normalement engagé.

Pour désengager celui-ci il faut agir en poussant, à l'aide d'une butée de débrayage (non représentée) sur les extrémités des doigts du diaphragme 6 pour faire pivoter celui-ci et libérer les garnitures 41, les languettes 51 rappelant alors le plateau de pression 5 en direction du fond 75 du couvercle 7.

Ce fond 75 est raccordé par une partie sinueuse 77, entourant le diaphragme 6, à la jupe 76.

Bien entendu au lieu de pattes 71 et de rondelles 72,73 on peut utiliser des colonnettes ou tout autre moyen d'assemblage pour montage pivotant du diaphragme 6 sur le couvercle 7, l'appui primaire 74 pouvant consister en un jonc porté par le fond 75 d'orientation transversale.

De même l'embrayage peut être du type tiré, la périphérie externe de sa rondelle Belleville s'appuyant sur le fond 75, tandis qu'à sa périphérie interne, ladite rondelle Belleville s'appuie alors sur le bossage 55.

Pour désengager l'embrayage il faut agir en traction sur l'extrémité des doigts du diaphragme 6.

Dans tous les cas, lorsque l'embrayage est engagé, le couple est transmis du vilebrequin 20, aux garnitures 41 et à un moyeu 42 cannelé intérieurement, que présente le disque de friction 4.

Ce moyeu 42 forme la partie de sortie du disque de friction 4 en étant en prise avec l'arbre d'entrée 43 de la boîte de vitesses, l'embrayage, ici sous forme de module, étant agencé entre le vilebrequin 20 et ledit arbre 43.

Le disque de friction 4 est conformé pour constituer un amortisseur de torsion propre à filtrer les vibrations engendrées notamment par le moteur du véhicule.

Cet amortisseur comporte à cet effet deux dispositifs amortisseurs de torsion 8,9 d'action étagée, à savoir un premier dispositif 9 dit préamortisseur, qui, plus faible que l'autre 8, constitue un bloc au sein du deuxième dispositif 8.

De manière connue en soi, le premier dispositif 9, dit préamortisseur, est destiné à intervenir seul, lorsque le couple à transmettre est très faible, par exemple dans le domaine de ralenti du moteur, tandis que le deuxième dispositif 8, dit amortisseur principal, intervient pour les couples plus importants, en régime de marche normal du véhicule.

Chacun de ces dispositifs comporte un voile respectivement 80,90, deux rondelles de guidage 81,82-91,92 solidaires l'une de l'autre et des moyens élastiques 83,93 interposés circonférentiellement entre le voile 80,90 et des rondelles de guidage 81,82-91,92 pour accoupler élastiquement ledit voile auxdites rondelles.

Ici ces rondelles de guidage sont disposées axialement de part et d'autre du voile 80,90 et les moyens élastiques 83,93 consistent en des organes élastiques à action circonférentielle montés dans des logements 84,85-94,95 pratiqués en vis-à-vis respectivement dans le voile 80,90 et dans les rondelles 81,82-91,92. Ici les rondelles de guidage 81,82-91,92 et les voiles 80,90 sont métalliques.

Les organes élastiques 83,93 consistent ici en des ressorts à boudin, les organes 83 étant montés par paire de manière concentrique dans le logement 84,85 en forme de fenêtre, tandis que les ressorts 93 sont montés de manière individuelle dans les logements 94,95 également en forme de fenêtre.

Certain des organes 83,93 peuvent consister en des blocs en matière élastique.

De préférence les organes 83 sont montés de manière étagée dans les logements 84,85.

Plus précisément, de manière connue en soi, certains ressorts sont montés sans jeu dans les fenêtres 84,85 tandis que d'autres sont montés sans jeu dans les fenêtres 85 des rondelles 81,82 et avec jeu dans les fenêtres 84 du voile 80.

De même les ressorts 93 sont montés sans jeu dans les fenêtres 95 des rondelles de guidage 91,92 et éventuellement pour certains d'eux avec jeu dans les fenêtres 94 du voile 90 et sans jeu dans lesdites fenêtres 95.

Tout cela dépend des applications, les organes élastiques 83 étant plus raides que les organes élastiques 93 en sorte que le deuxième dispositif 8 est plus raide que le premier dispositif 9 implanté axialement entre l'une 82, dite par commodité première rondelle de guidage, des rondelles de guidage du second dispositif 8 et le voile 80 de celui-ci.

Le premier dispositif 9, dit préamortisseur, est donc monté axialement entre les pièces 80,82 (le voile et l'une des rondelles de guidage) du deuxième dispositif 8, dit amortisseur principal.

Le premier dispositif 9 est ainsi monté au sein du second dispositif 8 en étant agencé radialement en-dessous des ressorts 83.

Ici le voile 80 présente, de manière connue en soi, à sa périphérie interne un jeu de cannelures, ici de forme trapézoïdale, engendrant avec jeu avec un jeu de cannelures, de forme trapézoïdale complémentaire, que présente le moyeu 42 à sa périphérie externe.

Au-delà d'un épaulement transversal, les cannelures du moyeu 42 sont de hauteur réduite et le voile 90 du dispositif 9, ici métallique, comme le voile 80 et le moyeu 42, présente à sa périphérie interne des cannelures, ici de forme trapézoïdale, par lesquelles il est en prise sans jeu avec la portion de hauteur radiale réduite du moyeu 42, formé ici à la faveur d'une surépaisseur étagée 44, que présente le moyeu 42 en saillie radiale à sa périphérie externe.

Le voile 90, de manière connue en soi, est ainsi calé axialement sur le moyeu 42 dans un sens à la faveur de l'épaulement formé par l'étagement de la surépaisseur 44 et dans l'autre sens par sertissage à la faveur de la hauteur réduite des cannelures.

Un dispositif de frottement 47, associé au deuxième dispositif, est interposé axialement entre le voile 80 et la rondelle de guidage 81. Ce dispositif comporte une rondelle de frottement au contact du voile 80 et comportant des pions traversant axialement des ouvertures pratiquées en correspondance dans la rondelle de guidage 81 pour sa liaison en rotation avec ladite rondelle.

Un organe élastique à action axiale, ici une rondelle Belleville, est intercalé entre la rondelle du dispositif 47 et la rondelle de guidage 81.

De même un dispositif de frottement 147 associé au premier dispositif 9 et analogue au dispositif de frottement 47 est interposé entre la rondelle de guidage 82 et le voile 90 du dispositif 9 calé axialement sur le moyeu 42 via la surépaisseur 44.

Le dispositif 147 comporte donc une rondelle frottant contre le voile 90 en étant entraînée en rotation par ses pions par la rondelle de guidage 82 et soumise à l'action d'un organe élastique du type rondelle Belleville. Les pions de ladite rondelle traversent des ouvertures de la rondelle 82 pour réaliser ladite liaison en rotation.

Un palier conique 46 entoure le moyeu en étant en contact de centrage avec celui-ci. Ce palier 46 présente un flasque et permet le centrage de la rondelle de guidage 81 à la faveur d'une collerette de centrage non référencée et de douilles 48 décrites ci-après.

On notera que les rondelles de guidage 81,82 sont reliées entre elles par des colonnettes 45 servant également à la fixation du disque 40, les colonnettes 45 traversant chacune à jeu un passage 145, que présente le voile 80 à cet affet.

Les rondelles de guidage 91,92 sont ici métalliques et l'une des rondelles, à savoir la rondelle 92, comporte des pattes d'assemblage 34 (figure 2), d'orientation axiale, issues d'un seul tenant de la périphérie externe de celles-ci. Ces pattes s'étendent radialement au-delà de la périphérie externe du voile 90 et traversent chacune à jeu de montage une échancrure complémentaire 36 formée à la périphérie exteme de la rondelle de guidage 91.

L'extrémité libre des pattes d'assemblage 34 est propre à constituer une saillie d'entraînement avec le voile 80 et est déformée radialement vers l'intérieur pour former un moyen de retenue 37 propre à coopérer avec la face de la rondelle de guidage 91 tournée à l'opposé du voile 90 (figure 3).

Les déformations 37 sont pratiquées initialement avant introduction dans les échancrures 36, en sorte qu'il est formé des moyens d'encliquetage à pattes d'assemblage élastiquement défomnables 34 intervenant entre les deux rondelles de guidage 91,92 reliées ainsi entre elles.

Un jeu radial existe entre les bords internes de l'échancrure 36 et les pattes d'assemblage 34.

Ici les déformations 37 consistent en des emboutis mais bien entendu elles peuvent consister en des crevés.

Ici la déformation 37 affecte centralement les pattes d'assemblage 34 en. laissant intact les bords latéraux desdites pattes pour coopération avec les bords latéraux des échancrures 36. Ces déformations 37 sont ici semi-sphériques.

Les pattes d'assemblage 34 sont formées à la faveur de saillies radiales, que présente la deuxième rondelle de guidage 92 à sa périphérie exteme entre deux ressorts consécutifs 83, tandis que les échancrures 36 sont formées à la faveur de saillies radiales, que présente la rondelle 91 à sa périphérie externe en regard des saillies de la rondelle 92. Les échancrures sont ici ouvertes vers l'extérieur.

Les extrémités libres des pattes 34 pénètrent chacune dans un évidement 35 réalisé dans le voile 80 et ce circonférentiellement de manière complémentaire.

Ainsi les rondelles de guidage 91,92 sont liées en rotation au voile 80 à la faveur desdils évidements 35 en forme de trous traversants. Ces rondelles 91,92 sont donc liées entre elles par les pattes 34, les évidements 36 et les déformations 37, l'assemblage étant réalisé par encliquetage des déformations avec les bords internes des évidements 36.

Lors du mouvement relatif entre la partie d'entrée 40,41 et la partie de sortie 42 de l'amortisseur de torsion, dans une première étape les ressorts 93 sont comprimés car les ressorts 83 sont plus raides en sorte que les rondelles de guidage 81,82 forment un bloc avec le voile 80.

Durant cette phase, un frottement de faible valeur intervient entre le voile 90 et la rondelle à pions du dispositif de frottement 147. Ce frottement est taré par la rondelle Belleville du dispositif 147 conçue pour ne pas oblitérer l'action des ressorts 93.

Ce mouvement se poursuit jusqu'à ce que le jeu angulaire entre le voile 80 et le moyeu 42 soit rattrapé.

Ainsi dans une deuxième étape, les ressorts 93 sont admis à être comprimés et le dispositif de frottement 47 intervient.

Lors de cette deuxième phase, les ressorts 93 restent dans leur état bandé, car aucun mouvement relatif ne se produit alors entre les voiles 80,90,

Un frottement a lieu au niveau des rondelles 92,82 et pour éviter un contact métal sur métal une rondelle de frottement 148 solidaire de la rondelle 92, par exemple par collage, est interposée entre les rondelles 92,82.

Un frottement intervient également en permanence entre le moyeu 42 et le palier 46, lié en rotation à la rondelle de guidage 81 de manière décrite ci-après.

Ici il s'agit de monter le module d'embrayage 1, formé par avance, sur le vilebrequin 20.

Pour ce faire le diaphragme 6 présente des trous pour le passage d'outils de fixation des vis 21 avantageusement à tête creuse. Plus précisément certains doigts du diaphragme 6 sont dotés à leur périphérie interne desdits trous de passage.

A cet effet, suivant l'invention, l'amortisseur de torsion du type sus-indiqué est caractérisé en ce que, pour formation d'un passage traversant, les rondelles 81,82 et le voile 80 de l'amortisseur principal, ainsi que le voile 90 du préamortisseur sont dotés de trous de passage 87,88,49,149 en coïncidence axiale les uns avec les autres, déterminant un axe axial commun Y-Y, et en ce que les rondelles de guidage du préamortisseur 81,82 sont implantées à l'extérieur des axes des trous de passage. Ici il est prévu en coïncidence axiale respectivement dans la rondelle 82, le voile 90, le voile 80, un trou de passage 87, 88, 49 par vis 21 et le palier 46 présente également des trous 149 de passage, de manière décrite ci-après, en coïncidence axiale avec lesdits passages. Les trous 149 associés à la rondelle de guidage 81 sont donc formés dans le palier 46.

Grâce à ceci il devient possible de passer un outil ainsi à travers le passage 87,88,49,149 pour montage du module sur le vilebrequin 20, les trous du diaphragme 6 étant en coïncidence axiale avec lesdits passages.

lci les rondelles de guidage 91,92 sont de hauteur réduite et, dans une forme de réalisation, leur diamètre intérieur est tel qu'il n'interfère pas avec ledit passage 87,88,49,149 de l'outil de vissage.

En variante (figure 1) la périphérie interne des rondelles 91, 92 est entaillée localement au niveau des passages selon l'invention pour passage de l'outil.

En pratique le diamètre interne des rondelles de guidage 91,92 est donc déterminé par la taille des outils et celles-ci s'étendent à distance de l'axe Y-Y à l'extérieur des axes des trous de passage précités.

Le voile 90 a une forme tortueuse et comporte une partie externe intercalée entre les deux rondelles de guidage 91,92 et ce avec jeu axial. Cette partie externe se raccorde par une partie inclinée, dotée des trous 88 pour le passage de l'outil de vissage, à une partie interne transversale et parallèle à la partie exfeme. La partie interne s'étend au voisinage du voile 80. Ici un léger jeu existe entre le voile 80 et ladite partie interne pour minimiser les frottements. Ceci est possible, car les rondelles 91,92 ont une hauteur réduite, la rondelle de guidage 91 ayant une partie centrale trouée.

On notera que les rssorts 93 sont radialement proches des ressorts 83 et que le dispositif de frottement 147 agit sur cette partie interne et que le décalage axial entre ladite partie exteme (éloignée du voile 80) et ladite partie interne (adjacente au voile 80) permet l'implantation du dispositif de frottement 147.

La (première) rondelle de guidage 82 présente un renflement saillant 150 pour logement de la rondelle 92 et de la rondelle de frottement 148. Ce renflement, ici de section globalement trapézoïdale, est dirigé axialement vers le diaphragme 6. C'est dans la partie inclinée de raccordement à la périphérie interne de la rondelle 82 que sont formés les trous 87 des passages selon l'invention.

Ainsi qu'on l'aura compris, l'amortisseur de torsion est d'épaisseur réduite au niveau de son moyeu 42 grâce à la conformation du voile 80 et au renflement 150 réalisable aisément par emboutissage.

Ainsi lors de la manoeuvre de l'embrayage, l'extrémité interne des doigts du diaphragme n'interférera pas avec l'amortisseur. Le renflement 150 ne perturbe donc pas le mouvement du diaphragme 6, dont les doigts sont ici légèrement inclinés en direction du fond 75 (figure 1).

Suivant une caractéristique le passage selon l'invention est formé indirectement dans la rondelle de guidage 81 la plus éloignée du dispositif 9 à la faveur du palier 46 présentant des logements annulaires 48. Le palier 46 est avantageusement en matière synthétique.

Plus précisément, ces logements annulaires sont en forme de douille 48 à alésage inteme 149 et la tête des vis 21 est emmanchée dans ces logements avant montage du module d'embrayage 1 sur le vilebrequin 20. Les douilles 48 sont cylindriques en étant circulairement continues. Les alésages 149 appartiennent donc aux passages selon l'invention.

On notera que la rondelle de guidage 81 est rognée centralement dans sa partie basse pour montage du palier 46.

Les trous 149 sont réalisés dans l'ensemble palier 46 - rondelle de guidage 81.

Ainsi les vis 21 sont solidaires initialement de l'amortisseur de torsion en étant emmanchées dans les douilles 48 et la rondelle de guidage 81 ne gène pas le passage des outils de vissage.

On notera que la rondelle de guidage 81 présente à sa périphérie interne en quelque sorte des dents engagées entre les douilles 48 du palier 46 pour liaison en rotation du palier 46 avec la rondelle 81.

Grâce à l'invention on obtient un module d'embrayage compact avec des vis imperdables 21 et un préamortisseur 9 surélevé.

Il est également possible de régler la force de serrage du diaphragme 6 en emmanchant plus ou moins la jupe 76 sur la jupe 26.

Bien entendu les rondelles de guidage du préamortisseur 9 peuvent être en matière synthétique ainsi que le voile 90 comme décrit dans le document FR-A-2 611 245. Dans ce cas la rondelle 92 est plus épaisse et la rondelle 148 est supprimée.

Néanmoins il est préférable que ledit voile soit métallique pour avoir plus facilement une forme tortueuse et réduction de l'encombrement axial.

Ici les trous 49, 87, 88 ont un même diamètre (il en est de même des trous du diaphragme 6) mais cela n'est pas obligatoire certains trous pouvant avoir un diamètre supérieur. Ici c'est le voile 80 qui a les plus petits trous 49 pour des questions de résistance.

Le palier 46 peut avoir une taille radiale inférieure et être dépourvu des passages 149. Dans ce cas il faut prévoir des trous directement dans la rondelle de guidage 81. On notera qu'ici l'extrémité axiale concernée de la surépaisseur 44 du moyeu 42 de la portion de hauteur réduite est déformée par sertissage au contact de la périphérie interne du voile 90 pour formation, de manière connue en soi, d'un sous-ensemble moyeu-préamortisseur 9. Bien entendu ceci n'est pas obligatoire.

Dans tous les cas, le préamortisseur est plus épais à sa périphérie externe qu'à sa périphérie interne.

Bien entendu, les rondelles élastiques à action axiale des dispositifs de frottement 47,147 peuvent consister en des rondelles élastiques ondulées au lieu de rondelles Belleville et la rondelle de frottement 148 peut être solidaire de la rondelle 82 (du renflement de celle-ci) ou être monté libre entre les deux rondelles 92,82.

Une rondelle antifriction peut être interposée entre les deux voiles 80,90 à la périphérie interne de ceux-ci.

Bien entendu, il ressort à la lumière de la description et des dessins que les ressorts du préamortisseur 9 sont implantés radialement à l'extérieur des axes des trous de passage précités, du fait qu'il sont logés dans les rondelles de guidage 91-92.

## Revendications

1. Amortisseur de torsion, notamment pour véhicule automobile, du genre comportant une partie d'entrée (40,41) et une partie de sortie (42), qui sont mobiles angulairement l'un par rapport à l'autre dans les limites d'un débattement angulaire déterminé, la partie d'entrée (40,41) et la partie de sortie (42) étant accouplées par deux dispositifs amortisseurs de torsion (8,9), d'action étagée, dont l'un (9), dit premier dispositif ou préamortisseur, est plus faible que l'autre (8), dit second dispositif ou amortisseur principal, chacun de ces deux dispositifs (8,9) comportant un voile (80,90), deux rondelles de guidage (81,82;91,92) solidaires l'une de l'autre et disposées axialement de part et d'autre du voile (80,90), des moyens élastiques (83,93) à action circonférentielle interposés circonférentiellement entre le voile (80,90) et les rondelles de guidage (81,82; 91,92), le voile (90) du préamortisseur (9) étant solidaire en rotation de la partie de sortie (42), tandis que les rondelles de guidage (91,92) de ce préamortisseur sont solidaires en rotation du voile (80) de l'amortisseur principal (8), ledit voile (80) de l'amortisseur principal (8) étant monté sur la partie de sortie (42) avec un jeu permettant ledit débattement angulaire déterminé, dans lequel le préamortisseur (9) est implanté axialement entre le voile (80) et l'une (82) des rondelles de guidage de l'amortisseur principal, dite première rondelle de guidage (82), **caractérisé en ce que**, pour formation d'un passage traversant, les rondelles de guidage (81,82) et le voile (80) de l'amortisseur principal (8), ainsi que le voile (90) du préamortisseur (9) sont dotés de trous (149,87,49,88), dits trous de passage, en coïncidence axiale les uns avec les autres et déterminant un axe commun (Y-Y), et **en ce que** les rondelles de guidage (91,92) du préamortisseur (9) sont implantées radialement à l'extérieur des axes des trous de passage (149,87,49,88).

2. Amortisseur selon la revendication 1, **caractérisé en ce que** le voile (90) du préamortisseur (9) a une forme tortueuse et présente une partie exteme décalée axialement par rapport à sa partie interne plus proche du voile (80) de l'amortisseur principal (8).

3. Amortisseur selon la revendication 2, **caractérisé en ce que** ladite partie interne est reliée à la partie externe du voile (90) du préamortisseur (9) par une partie inclinée présentant les trous de passage (88).

4. Amortisseur selon la revendication 2 ou 3, **caractérisé en ce qu'**un dispositif de frottement (147) est agencé entre la partie interne du voile (90) du préamortisseur (9) et la première rondelle de guidage (82) de l'amortisseur principal (8).

5. Amortisseur selon la revendication 4, **caractérisé en ce que** le dispositif de frottement (147) comporte une rondelle frottant contre le voile (90) du préamortisseur (9) en étant entraînée en rotation par la première rondelle de guidage (82) de l'amortisseur principal (8).

6. Amortisseur selon l'une quelconque des revendications 2 à 5, **caractérisé en ce qu'**un léger jeu existe. entre le voile (80) de l'amortisseur principal (8) et ladite partie interne du voile (90) du préamortisseur (9) pour minimiser les frottements.

7. Amortisseur selon l'une quelconque des revendications 1 à 6, **caractérisé en ce que** la première rondelle de guidage (82) de l'amortisseur principal (8), adjacente à la rondelle de guidage (92) concernée du préamortisseur (9), est dotée d'un renflement saillant (150) pour logement de ladite rondelle de guidage (92) du préamortisseur (9).

8. Amortisseur selon la revendication 7, **caractérisé en ce que** ledit renflement (150) loge une rondelle de frottement (148) interposée entre lesdites rondelles de guidage (82,92) respectivement de l'amortisseur principal (8) et du préamortisseur (9).

9. Amortisseur selon l'une quelconque des revendications précédentes, **caractérisé en ce que** les trous de passage (149), associés à la rondelle de guidage (81) de l'amortisseur principal, la plus éloignée du préamortisseur (9), sont formés à l'aide d'une douille (48) appartenant à un palier (46) interposé radialement entre l'élément de sortie (42) et ladite rondelle de guidage (81) concernée de l'amortisseur principal (8).

10. Module d'embrayage du genre comportant successivement, axialement, un plateau de réaction (2,3), un disque de friction (4), un plateau de pression (5), un diaphragme (6) et un couvercle (7), dans lequel le couvercle (7) est fixé sur le plateau de réaction (2,3) et dans lequel le plateau de pression (5) est solidaire en rotation avec mobilité axiale du couvercle (7), le diaphragme (6) étant monté de manière pivotante sur le couvercle (7), **caractérisé en ce que** le disque de friction (4) comporte un amortisseur de torsion selon l'une quelconque des revendications 1 à 9.

## Claims

1. A torsion damper, especially for a motor vehicle, of the kind comprising an input part (40, 41) and an output part (42), which are movable circumferentially one with respect to the other within the limits of a predetermined angular displacement, the input part (40, 41) and the output part (42) being coupled together by means of two torsion damping devices (8, 9) giving stepped action, with one of these (9), referred to as the first device or predamper, being weaker than the other one (8), which is referred to as the second device or main damper, each of the two said devices comprising a damper plate (80, 90), two guide rings (81, 82; 91, 92) fixed to each other and disposed axially on either side of the damper plate (80, 90), and circumferentially acting resilient means (83, 93) interposed circumferentially between the damper plate (80, 90) and the guide rings (81, 82; 91, 92), the damper plate (90) of the predamper (9) being fixed in rotation to the output part (42), while the guide rings (91, 92) of the predamper are fixed in rotation tot he damper plate (80) of the main damper (8), the said damper plate (80) of the main damper (8) being mounted on the output part (42) with a clearance which enables the said predetermined angular displacement to take place, and in which the predamper (9) is mounted axially between the damper plate (80) and one (82) of the guide rings of the main damper, referred to as the first guide ring (82), **characterised in that**, in order to define a through access passage, the guide rings (81, 82) and the damper plate (80) of the main damper (8), together with the damper plate (90) of the predamper (9), are formed with holes (149, 87, 49, 88), referred to as passage holes, in axial register with each other and defining a common axis (Y-Y), and **in that** the guide rings (91, 92) of the predamper (9) are mounted radially outwards of the axes of the passage holes (149, 87, 49, 88).

2. A damper according to Claim 1, **characterised in that** the damper plate (90) of the predamper (9) is of sinuous form, and has an outer portion which is offset axially with respect to its inner portion, which is closer to the damper plate (80) of the main damper (8).

3. A damper according to Claim 2, **characterised in that** the said inner portion is joined to the outer portion of the damper plate (90) of the predamper (9) through an inclined portion having the passage holes (88).

4. A damper according to Claim 2 or Claim 3, **characterised in that** a friction device (147) is arranged between the inner portion of the damper plate (90) of the predamper (9) and the first guide ring (82) of the main damper (8).

5. A damper according to Claim 4, **characterised in that** the friction device (147) comprises a ring engaging frictionally against the damper plate (90) of the predamper (9) by being actuated in rotation by the first guide ring (82) of the main damper (8).

6. A damper according to any one of Claims 2 to 5, **characterised in that** a slight clearance exists between the damper plate (80) of the main damper (8) and the said inner portion of the damper plate (90) of the predamper (9), whereby to minimise friction,

7. A damper according to any one of Claims 1 to 6, **characterised in that** the first guide ring (82) of the main damper (8) which is adjacent to the appropriate guide ring (92) of the predamper (9), is provided with a projecting bulge (150) for accommodation of the said guide ring (92) of the predamper (9).

8. A damper according to Claim 7, **characterised in that** the said bulge (150) contains a friction ring (148) interposed between the said guide rings (82, 92) of the main damper (8) and predamper (9) respectively.

9. A damper according to any one of the preceding Claims, **characterised in that** the passage holes (149) which are associated with the guide ring (81) of the main damper furthest away from the predamper (9) are defined by a bush (48), which is part of a bearing (46) interposed radially between the output element (42) and the appropriate said guide ring (81) of the main damper (8).

10. A clutch module of the kind comprising, in axial succession, a reaction plate (2, 3), a friction disc (4), a pressure plate (5), a diaphragm (6), and a cover plate (7), in which the cover plate (7) is fixed on the reaction plate (2, 3), and in which the pressure plate (5) is fixed in rotation to, but movable axially with respect to, the cover plate (7), the diaphragm (6) being mounted pivotaliy on the cover plate (7), **characterised in that** the friction disc (4) includes a torsion damper according to any one of Claims 1 to 9.

## Patentansprüche

1. Drehschwingungsdämpfer, insbesondere für Kraftfahrzeuge, umfassend einen Eingangsteil (40, 41) und einen Ausgangsteil (42), die im Verhältnis zueinander winklig in den Grenzen einer bestimmten Winkelauslenkung beweglich sind, wobei der Eingangsteil (40, 41) und der Ausgangsteil (42) durch zwei Drehschwingungsdämpfervorrichtungen (8, 9) mit gestufter Wirkung verbunden sind, von denen eine (9), die als erste Vorrichtung oder Vordämpfer bezeichnet wird, schwächer als die andere (8) ist, die als zweite Vorrichtung oder Hauptdämpfer bezeichnet wird, wobei jede dieser beiden Vorrichtungen (8, 9) eine Zwischenscheibe (80, 90), zwei fest miteinander verbundene und axial beiderseits der Zwischenscheibe (80, 90) angeordnete Führungsscheiben (81, 82; 91, 92) und umfangsmäßig wirksame elastische Mittel (83, 93) umfaßt, die umfangsmäßig zwischen der Zwischenscheibe (80, 90) und den Führungsscheiben (81, 82; 91, 92) eingefügt sind, wobei die Zwischenscheibe (90) des Vordämpfers (9) drehfest mit dem Ausgangsteil (42) verbunden ist, während die Führungsscheiben (91, 92) dieses Vordämpfers drehfest mit der Zwischenscheibe (80) des Hauptdämpfers (8) verbunden sind, wobei die besagte Zwischenscheibe (80) des Hauptdämpfers (8) am Ausgangsteil (42) mit einem Spiel angebracht ist, das die besagte bestimmte Winkelauslenkung ermöglicht, wobei der Vordämpfer (9) axial zwischen der Zwischenscheibe (80) und einer (82) der Führungsscheiben des Hauptdämpfers angeordnet ist, die als erste Führungsscheibe (82) bezeichnet wird , **dadurch gekennzeichnet, daß** zur Bildung eines Durchgangs die Führungsscheiben (81, 82) und die Zwischenscheibe (80) des Hauptdämpfers (8) sowie die Zwischenscheibe (90) des Vordämpfers (9) mit als Durchgangslöcher bezeichneten Löchern (149, 87, 49, 88) versehen sind, die in axialer Übereinstimmung zueinander angeordnet sind und eine gemeinsame Achse (Y-Y) bestimmen, und daß die Führungsscheiben (91, 92) des Vordämpfers (9) radial außerhalb der Achsen der Durchgangslöcher (149, 87, 49, 88) angeordnet sind.

2. Drehschwingungsdämpfer nach Anspruch 1 , **dadurch gekennzeichnet, daß** die Zwischenscheibe (90) des Vordämpfers (9) eine gewundene Form hat und einen Außenteil aufweist, der im Verhältnis zu ihrem näher an der Zwischenscheibe (80) des Hauptdämpfers (8) angeordneten Innenteil axial versetzt ist.

3. Drehschwingungsdämpfer nach Anspruch 2 , **dadurch gekennzeichnet, daß** der besagte Innenteil mit dem Außenteil der Zwischenscheibe (90) des Vordämpfers (9) durch einen geneigten Teil verbunden ist, der die Durchgangslöcher (88) aufweist.

4. Drehschwingungsdämpfer nach Anspruch 2 oder 3, **dadurch gekennzeichnet, daß** eine Reibungsvorrichtung (147) zwischen dem Innenteil der Zwischenscheibe (90) des Vordämpfers (9) und der ersten Führungsscheibe (82) des Hauptdämpfers (8) angeordnet ist.

5. Drehschwingungsdämpfer nach Anspruch 4 , **dadurch gekennzeichnet, daß** die Reibungsvorrichtung (147) eine Scheibe umfaßt, die an der Zwischenscheibe (90) des Vordämpfers (9) entlang reibt, wobei sie durch die erste Führungsscheibe (82) des Hauptdämpfers (8) drehend mitgenommen wird.

6. Drehschwingungsdämpfer nach einem der Ansprüche 2 bis 5, **dadurch gekennzeichnet, daß** ein leichtes Spiel zwischen der Zwischenscheibe (80) des Hauptdämpfers (8) und dem besagten Innenteil der Zwischenscheibe (90) des Vordämpfers (9) existiert, um die Reibungen zu minimieren.

7. Drehschwingungsdämpfer nach einem der Ansprüche 1 bis 6, **dadurch gekennzeichnet, daß** die erste Führungsscheibe (82) des Hauptdämpfers (8), die der betroffenen Führungsscheibe (92) des Vordämpfers (9) zugewandt ist, mit einer vorstehenden Ausbauchung (150) für die Aufnahme der besagten Führungsscheibe (92) des Vordämpfers (9) versehen ist.

8. Drehschwingungsdämpfer nach Anspruch 7 , **dadurch gekennzeichnet, daß** die besagte Ausbauchung (150) eine Reibscheibe (148) aufnimmt, die zwischen den besagten Führungsscheiben (82, 92) des Hauptdämpfers (8) bzw. des Vordämpfers (9) eingefügt ist.

9. Drehschwingungsdämpfer nach einem der vorangehenden Ansprüche, **dadurch gekennzeichnet, daß** die Durchgangslöcher (149), die zu der am weitesten vom Vordämpfer (9) entfernten Führungsscheibe (81) des Hauptdämpfers gehören, mittels einer Hülse (48) ausgebildet sind, die zu einem Lager (46) gehört, das radial zwischen dem Ausgangselement (42) und der besagten betroffenen Führungsscheibe (81) des Hauptdämpfers (8) eingefügt ist.

10. Kupplungseinheit, die axial hintereinander eine Gegenanpreßplatte (2, 3), eine Reibungskupplungsscheibe (4), eine Druckplatte (5), eine Membranfeder (6) und einen Deckel (7) umfaßt, wobei der Deckel (7) an der Gegenanpreßplatte (2, 3) befestigt ist und wobei die Druckplatte (5) drehfest und axial beweglich mit dem Deckel (7) verbunden ist, während die Membranfeder (6) schwenkbar auf dem Deckel (7) gelagert ist, **dadurch gekennzeichnet, daß** die Reibungskupplungsscheibe (4) einen Drehschwingungsdämpfer nach einem der Ansprüche 1 bis 9 umfaßt.
